# EUROPÄISCHE PATENTSCHRIFT

(11) **EP 2 060 000 B1**
(45) Veröffentlichungstag und Bekanntmachung des Hinweises auf die Patenterteilung: **25.01.2012**
(21) Anmeldenummer: 07802728.1
(22) Anmeldetag: 20.08.2007
(51) Int. Cl.: H02P 1/00

(54) **VERFAHREN ZUM BETREIBEN EINES MOTORSYSTEMS SOWIE EIN MOTORSYSTEM**
METHOD FOR OPERATING A MOTOR SYSTEM, AND MOTOR SYSTEM
PROCÉDÉ DE FONCTIONNEMENT D'UN SYSTÈME DE MOTEUR, DE MÊME QUE SYSTÈME DE MOTEUR

(30) Priorität: 06.09.2006 DE 102006041864
(43) Veröffentlichungstag der Anmeldung: 20.05.2009
(73) Patentinhaber: SIEMENS AKTIENGESELLSCHAFT, 80333 München (DE)
(72) Erfinder: REICHENBACH, Norbert, 92224 Amberg (DE); SEITZ, Johann, 92224 Amberg (DE)
(86) Internationale Anmeldenummer: PCT/EP2007/058629
(87) Internationale Veröffentlichungsnummer: WO 2008/028798

(56) Entgegenhaltungen:
- WO-A-2006/034977
- DE-A1- 19 701 856
- JP-A- 61 009 179
- JP-A- 61 142 981
- US-A- 4 577 604

## Beschreibung

Die Erfindung betrifft ein Verfahren zum Betreiben eines Motorsystems mit einer Treiberschaltung und einem Motor und weiterhin ein solches Motorsystem.

Je nach Einsatzgebiet werden Motorsysteme heute mit Einheiten versehen, die einen sanften Anlauf des Motors ermöglichen, um ein ruckartiges Anfahren des Motors z.B. bei sofortigem Anlegen der maximalen Betriebsspannung zu vermeiden. Dazu wird der Motor üblicherweise mit einer Treiberschaltung versehen, die in geeigneter Weise, z. B. mit einer Phasenanschnittsteuerung, durch eine Steuereinheit angesteuert wird, um ein langsames Ansteigen der Spannung, die dem Motor zugeführt wird, während einer Einschaltphase zu gewährleisten. Die Treiberschaltung weist üblicherweise Leistungshalbleiter auf, die einen Teil der dem Motor bereitgestellten Leistung aufnehmen und diese in Verlustwärme umwandeln.

Um den Leistungsverlust in der Treiberschaltung zu reduzieren, wird nach der Einschaltphase, d. h. bei Erreichen der maximalen Ansteuerung des Motors, die Treiberschaltung überbrückt, so dass die Verlustleistung in der Treiberschaltung, d. h. in deren Leistungshalbleiter, unterbunden wird. Dadurch wird die Verlustleistung im Dauerbetrieb, insbesondere bei Nennlast des Motors, erheblich reduziert, so dass die Schaltschrankklimatisierung erleichtert wird. Weiterhin kann dadurch auf groß dimensionierte Kühlelemente verzichtet werden, so dass ein kompakter Geräteaufbau möglich ist.

Wenn die Treiberschaltung überbrückt ist, wird der Motor üblicherweise mit der maximalen verfügbaren Spannung angesteuert. Physikalisch bedingt reduziert sich bei einem Betrieb des Motors in einem Teillastbereich, d. h. einem Bereich, in dem die an dem Motor anliegende Last geringer ist als eine Nennlast, der von dem Motor aufgenommene Strom nicht im gleichen Maß. Dadurch entstehen im Motor jedoch höhere Wärmeverluste als nötig, so dass mehr Energie zum Betreiben des Motors benötigt wird als notwendig. Wird der Motor bei Motorsystemen, bei denen keine Überbrückung der Treiberschaltung möglich ist, im Nennlastbereich betrieben, treten im Allemeinen hohe Verluste in den Leistungshalbleitern der Treiberschaltung auf.

Die Druckschrift US 4,577,604 offenbart ein Steuersystem für eine Kraftstoffpumpe, wobei die Betriebsgeschwindigkeit der Kraftstoffpumpe zum Steuern des Kraftstoffdrucks in einem Kraftstoff-Versorgungssystem in einer Verbrennungsmaschine gesteuert wird. Das Steuersystem umfasst eine Hauptsteuerschaltung, die eine Treiberschaltung mit einer Stromversorgung permanent verbindet und einer im Normalfall geöffneten Hilfsschaltung. Die Hauptsteuerschaltung passt die Stromversorgung an die Treiberschaltung an, um die Betriebsgeschwindigkeit der Kraftstoffpumpe entweder auf eine erste maximale oder auf eine zweite minimale Geschwindigkeit anzupassen. Die Hilfsschaltung etabliert eine elektrische Verbindung zwischen der Treiberschaltung und der Stromversorgung, wenn ein Erhöhen des Kraftstoffdrucks in der Versorgungsleitung angefordert wird und somit das Luft-Kraftstoff-Verhältnis über einen vorbestimmten Wert auf Basis von vorab ausgewählten Betriebsparametern detektiert wird.

Es ist Aufgabe der vorliegenden Erfindung, in einem Motorsystem, bei dem ein Sanftanlauf des Motors realisiert ist, einen Betrieb des Motors zu ermöglichen, bei dem die Leistungsaufnahme des Motors reduziert ist.

Diese Aufgabe wird durch das Verfahren zum Betreiben eines Motorsystems nach Anspruch 1 sowie durch das Motorsystem nach Anspruch 7 gelöst.

Weitere vorteilhafte Ausgestaltungen der Erfindung sind in den abhängigen Ansprüchen angegeben.

Gemäß einem ersten Aspekt der vorliegenden Erfindung ist ein Verfahren zum Betreiben eines Motorsystems mit einer Treiberschaltung und einem Motor vorgesehen. Die Treiberschaltung wird während einer Einschaltphase betrieben, um einen Sanftanlauf des Motors auszuführen. In einer Normalbetriebsphase ist die Treiberschaltung überbrückbar. Dabei wird in der Normalbetriebsphase die Treiberschaltung abhängig von einer Last, mit der der Motor betrieben wird, überbrückt.

Auf diese Weise kann ein Motorsystem mit einer Sanftanlaufoption in einem Energiesparbetrieb betrieben werden, indem in der Normalbetriebsphase der Motor nicht unabhängig von der angelegten Last angesteuert wird, wie es bei einem unbedingten Überbrücken der Treiberschaltung nach der Einschaltphase der Fall wäre. Stattdessen wird das Überbrücken der Treiberschaltung bedingt abhängig von der Last, die an dem Motor anliegt, durchgeführt.

Vorzugsweise wird die Last, mit der der Motor betrieben wird, detektiert, indem eine Messung eines Stromes durch den Motor durchgeführt wird. Die Strommessung ermöglicht das Ermitteln der Leistungsaufnahme des Motors, die wiederum zu der Last, die an dem Motor anliegt, in Beziehung steht.

Insbesondere wird, wenn die Last, mit der der Motor betrieben wird, größer ist als ein Schwelllastwert, die Treiberschaltung überbrückt. Dabei wird vorzugsweise, wenn die Last, mit der der Motor betrieben wird, kleiner ist als der Schwelllastwert, kein Überbrücken der Treiberschaltung durchgeführt und die Treiberschaltung so betrieben, dass der Motor mit Phasenanschnittbetrieb angesteuert wird. In diesem Betrieb wird dem Motor nur so viel Leistung zugeführt, wie zum Betrieb des Motors an der Teillast erforderlich ist. Weiterhin wird vorzugsweise die Leistung abhängig von der Last, mit der der Motor betrieben wird, eingestellt (Energiesparbetrieb).

Erfindungsgemäß ist vorgesehen, dass in der Normalbetriebsphase die Treiberschaltung weiterhin abhängig von einer Temperatur in der Treiberschaltung überbrückt wird. Dadurch kann gewährleistet werden, dass die Treiberschaltung, die in der Regel bei einem Motorsystem mit einem Sanftanlaufbetrieb nur für geringe Belastungen ausgelegt ist, gegen ein Überhitzen im Energiesparbetrieb geschützt werden kann.

Gemäß einem weiteren Aspekt der vorliegenden Erfindung ist ein Motorsystem mit einem Motor, einer Treiberschaltung zum Ansteuern des Motors, und einer Steuereinheit vorgesehen, die mit der Treiberschaltung verbunden ist, um die Treiberschaltung während einer Einschaltphase anzusteuern, so dass ein Sanftanlauf des Motors ausgeführt wird. Weiterhin ist eine Überbrückungsschaltung vorgesehen, mit der in einer Normalbetriebsphase die Treiberschaltung überbrückbar ist, wobei die Steuereinheit in der Normalbetriebsphase die Treiberschaltung abhängig von einer Last, mit der der Motor betrieben wird, mit Hilfe der Überbrückungsschaltung überbrückt. Vorzugsweise ist eine Detektionsschaltung vorgesehen, um die Last, mit der der Motor betrieben wird, zu detektieren, indem eine Messung eines Stromes durch den Motor durchgeführt wird.

Gemäß einer Ausführungsform der Erfindung überbrückt die Steuereinheit, wenn mit Hilfe der Detektionsschaltung festgestellt wird, dass die Last, mit der der Motor betrieben wird, größer ist als ein Schwelllastwert, die Treiberschaltung.

Ferner kann die Steuereinheit, wenn mit Hilfe der Detektionsschaltung festgestellt wird, dass die Last, mit der der Motor betrieben wird, kleiner ist als der Schwelllastwert, die Treiberschaltung ansteuern, um den Motor in einem Phasenanschnittbetrieb zu betreiben.

Weiterhin kann die Steuereinheit die Treiberschaltung so betreiben, dass die Leistung abhängig von der Last, mit der der Motor betrieben wird, eingestellt wird (Energiesparbetrieb).

Gemäß einer Ausführungsform der Erfindung kann die Steuereinheit die Überbrückungsschaltung in der Normalbetriebsphase ansteuern, so dass die Treiberschaltung abhängig von einer Temperatur in der Treiberschaltung überbrückt wird.

Bevorzugte Ausführungsformen der Erfindung werden nachfolgend anhand der beigefügten Zeichnungen näher erläutert. Es zeigen:
- FIG 1: ein Blockschaltbild eines erfindungsgemäßen Motorsystems;
- FIG 2: ein Flussdiagramm zur Veranschaulichung des Verfahrens zum Betreiben eines Motorsystems in einer weiteren Ausführungsform der Erfindung; und
- FIG 3: ein Flussdiagramm eines Verfahrens zum Betreiben eines Motorsystems gemäß einer weiteren Ausführungsform der Erfindung.

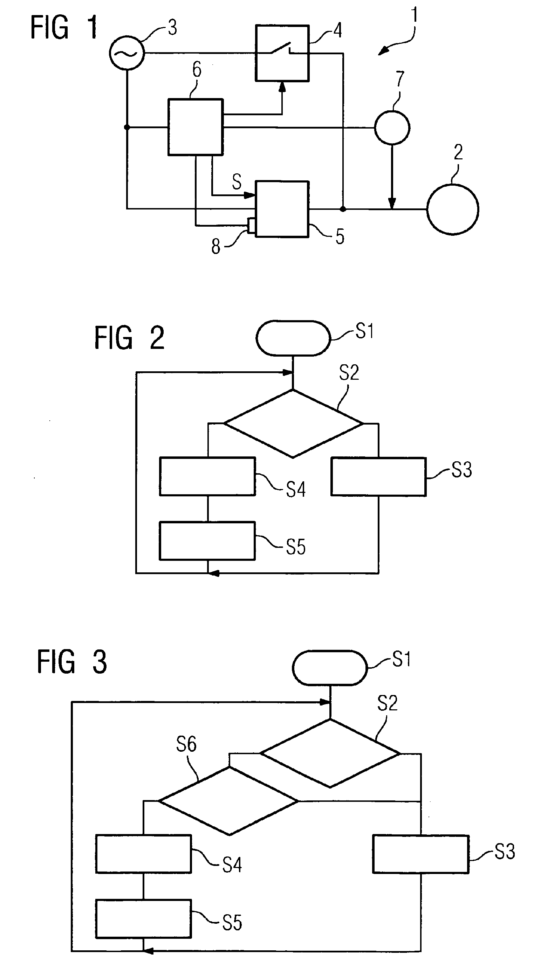

In FIG 1 ist ein Blockschaltbild eines Motorsystems 1 dargestellt, das einen Elektromotor 2, z. B. einen Asynchronmotor oder einen anderen bürstenlosen Motor aufweist. Der Motor 2 wird im gezeigten Ausführungsbeispiel mit Hilfe einer Wechselstromquelle 3 betrieben und ist mit dieser direkt über eine Überbrückungsschaltung 4, die z.B. als Schalter ausgebildet ist, verbindbar oder über eine Treiberschaltung 5, die abhängig von einem bereitgestellten Ansteuerwert S den Wechselstrom aus der Wechselstromquelle 3 z. B. durch eine Phasenanschnittssteuerung modifiziert, um eine Teilleistung an den Motor 2 anzulegen.

Die Ansteuergröße S wird von einer Steuereinheit 6 bereitgestellt. Die Steuereinheit 6 ist weiterhin mit der Überbrückungsschaltung 4 verbunden, um diese zu schalten , so dass die Treiberschaltung 5 überbrück wird oder nicht. Weiterhin kann die Steuereinheit 6 mit einer Detektorschaltung 7 verbunden sein, die einen Strom in den Motor 2 misst, um daraus die Last an dem Motor 2 zu ermitteln. Ferner kann optional ein Temperatursensor 8 vorgesehen sein, der an der Treiberschaltung 5 angeordnet ist, um die Temperatur der Treiberschaltung 5 festzustellen und insbesondere um festzustellen, ob ein bestimmter Temperaturschwellwert überschritten wird. Die Temperatur und/oder das Überschreiten des Temperaturschwellwertes wird der Steuereinheit 6 angezeigt.

In FIG 2 ist ein Flussdiagramm zur Verdeutlichung des Verfahrens zum Betreiben des Motorsystems 1 gemäß der Erfindung dargestellt. Nach dem Einschalten des Motorsystems bzw. nach dem Signalisieren, dass der Motor 2 anlaufen soll wird der Motor gemäß einem Sanftanlaufprogramm mit ansteigender Leistung angesteuert, so dass der Motor ohne Rucken anläuft (Schritt S1). Anschließend, d.h. nach Beenden der Einschaltphase, wird in einem Schritt S2 überprüft, ob die Last, mit der der Motor 2 betrieben wird, größer ist als ein Schwelllastwert. Dabei wird zunächst mit Hilfe der Detektorschaltung 7 die Last an dem Motor 2 bestimmt. Wenn die Last an dem Motor 2 größer ist als der Schwelllastwert (Schritt S3), steuert die Steuereinheit 6 die Überbrückungsschaltung 4 an, so dass der Motor 2 direkt über den geschlossenen Schalter der Überbrückungsschaltung mit der Wechselstromquelle 3 verbunden wird und dadurch die Treiberschaltung 5 überbrückt wird.

Ist die Last, mit der der Motor betrieben wird, kleiner als der Schwelllastwert, so wird in Schritt S4 die Überbrückungsschaltung 4 durch die Steuereinheit 6 angesteuert, so dass die direkte Verbindung zwischen der Wechselstromquelle 3 und dem Motor 2 unterbrochen wird, und der Motor 2 nun über die Treiberschaltung 5 angesteuert wird (Schritt S5). Die Steuereinheit 6 steuert abhängig von der in Schritt S2 ermittelten Last an dem Motor 2 die Treiberschaltung 5 an, so dass dem Motor 2 nur eine Leistung zur Verfügung gestellt wird, die zum Betreiben der an dem Motor 2 angelegten Last ausreichend ist. Beispielsweise kann die Treiberschaltung 5 eine Phasenanschnittssteuerung des von der Wechselstromquelle 3 bereitgestellten Wechselstroms anhand der Ansteuergröße S durchführen, die von der Steuereinheit 6 anhand des detektierten Stromes durch den Motor 2 ermittelt wird. Die Phasenanschnittsteuerung bewirkt, dass die effektive Spannung, die an den Motor 2 angelegt wird, reduziert wird, so dass die Leistungsaufnahme des Motors 2, der, wie zuvor festgestellt wurde, nur mit einer Teillast betrieben wird, geringer ist als bei einer überbrückten Treiberschaltung 5, bei der der Motor mit einer von der Wechselstromquelle bereitgestellten Maximalspannung betrieben wird.

In FIG 3 ist eine weitere Möglichkeit für ein Verfahren zum Betreiben eines Motorsystems gemäß der Erfindung dargestellt. Identische Schritte des Verfahrens sind mit den gleichen Bezugszeichen, wie in FIG 2, versehen. Im Wesentlichen unterscheidet sich das Verfahren der FIG 3 dadurch, dass nach dem Schritt S2, wenn die Last, mit der der Motor betrieben wird, kleiner ist als der Schwelllastwert, zunächst in einem Schritt S6 abgefragt wird, ob die Leistungshalbleiter der Treiberschaltung 5 eine höhere Temperatur aufweisen als der Temperaturschwellwert. Dies kann durch den Temperaturdetektor 8 festgestellt werden, der entweder die Temperatur der Treiberschaltung 5 angibt und diese an die Steuereinheit 6 übermittelt oder feststellt, dass der Temperaturschwellwert überschritten worden ist, und dieses Überschreiten an die Steuereinheit 6 signalisiert.

Wird festgestellt, dass der Temperaturschwellwert überschritten wurde, führt das Verfahren als nächsten Schritt den Schritt S3 aus, bei dem die Überbrückungsschaltung 4 angesteuert wird, um die Treiberschaltung 5 zu überbrücken. Dadurch wird der Motor 2 direkt mit der Wechselstromquelle 3 verbunden und die Ansteuerung der Treiberschaltung 5 unterbleibt und wird vorzugsweise so durchgeführt, dass die Leistungshalbleiter in der Treiberschaltung 5 in einem ausgeschalteten Zustand sind.

Hat die Temperatur der Treiberschaltung 5 den Temperaturschwellwert nicht überschritten, so wird als nächstes der Schritt S4 ausgeführt, wobei die Überbrückungsschaltung 4 deaktiviert (geöffnet) wird, sofern sie noch nicht deaktiviert ist, und die Treiberschaltung 5 entsprechend dem oben beschriebenen Schritt S5 angesteuert, um den Motor 2 optimal in dem Teillastbereich angepasst an die an dem Motor 2 angelegte Last (ermittelt in Schritt S2) zu betreiben.

Die Abfragen des Schrittes S2 und des Schrittes S6 werden wiederholt durchgeführt, so dass die Steuereinheit 6 auch während des laufenden Betriebs jederzeit entscheiden kann, zwischen dem Energiesparbetrieb, bei dem der Motor 2 nach der Einschaltphase mit einer Teillast betrieben wird und über die Treiberschaltung 5 angesteuert wird, und einem Überbrückungsbetrieb, bei dem der Motor 2 direkt durch die Wechselstromquelle 3 versorgt wird, zu wechseln.

Das erfindungsgemäße Verfahren betrifft insbesondere Motorsysteme, bei denen die Treiberschaltung 5 ausgelegt ist, um lediglich einen Sanftanlauf des Motors zu gewährleisten. Ein solcher Sanftanlauf findet nur kurzzeitig während einer Einschaltphase des Motors 2 statt, d. h. die Treiberschaltung ist entsprechend dieser Anforderung minimal dimensioniert und nicht für einen Dauerbetrieb des Motors 2 vorgesehen, da entweder die Leistungshalbleiter zu schwach ausgelegt sind, oder eine geeignete Wärmeabführung nicht vorgesehen ist. Insbesondere aus diesem Grunde ist der Schwelllastwert so zu wählen, dass ein Betrieb des Motors 2 in einem Teillastbereich nicht zu einem Überlasten der Treiberschaltung 5 führt, was insbesondere bei dem Verfahren gemäß Figur 3 zu einem häufigen Hin- und Herschalten zwischen dem Überbrückungsbetrieb und dem Energiesparbetrieb aufgrund des Überschreitens des Temperaturschwellwerts führen würde. Ein Energiesparbetrieb ist insbesondere dann sinnvoll, wenn der Motor in Teillast (z. B. < 60 % der Motornennleistung) betrieben wird. Die Motornennleistung ist die maximale Leistung, mit der der Motor zuverlässig über eine unbegrenzte Zeitdauer betrieben werden kann. Um die Anzahl dieser Umschaltvorgänge zwischen dem Energiesparbetrieb und dem Überbrückungsbetrieb noch weiter zu reduzieren, kann der Schwelllastwert auch so gewählt werden, dass der Energiesparbetrieb nur durchgeführt wird, wenn die Last des Motors zu einem Strom durch den Motor führt, der 20 % - 40 % des (von der Nennleistung abhängigen) Nennstromes des Motors beträgt.

## Patentansprüche

1. Verfahren zum Betreiben eines Motorsystems (1) mit einer Treiberschaltung (5)und einem Motor (2), wobei die Treiberschaltung (5) während einer Einschaltphase betrieben wird, um einen Sanftanlauf des Motors (2) auszuführen, und wobei die Treiberschaltung (5) in einer Normalbetriebsphase in Abhängigkeit von einer Last, mit der der Motor (2) betrieben wird überbrückbar ist, wobei in der Normalbetriebsphase die Treiberschaltung (5) weiterhin in Abhängigkeit von einer Temperatur in der Treiberschaltung (5) überbrückt wird.

2. Verfahren nach Anspruch 1, wobei die Last, mit der der Motor (2) betrieben wird, detektiert wird, indem eine Messung eines Stromes durch den Motor (2) durchgeführt wird.

3. Verfahren nach Anspruch 1 oder 2, wobei die Treiberschaltung (5) überbrückt wird, wenn die Last, mit der der Motor (2) betrieben wird, größer ist als ein Schwelllastwert.

4. Verfahren nach Anspruch 3, wobei, wenn die Last, mit der der Motor (2) betrieben wird, kleiner ist als der Schwelllastwert, kein Überbrücken der Treiberschaltung (5) durchgeführt wird und die Treiberschaltung (5) in einem Phasenanschnittbetrieb betrieben wird.

5. Verfahren nach Anspruch 4, wobei die Leistung abhängig von der Last, mit der der Motor (2) betrieben wird, eingestellt wird.

6. Verfahren nach Anspruch 1, wobei die Treiberschaltung überbrückt wird, wenn die Temperatur eine Schwelltemperatur übersteigt.

7. Motorsystem (1) umfassend:
- einen Motor (2);
- eine Treiberschaltung (5) zum Ansteuern des Motors;
- eine Steuereinheit (6), die mit der Treiberschaltung (5) verbunden ist, um die Treiberschaltung (5) während einer Einschaltphase anzusteuern, um einen Sanftanlauf des Motors (2) auszuführen; und
- eine Überbrückungsschaltung (4), mit der in einer Normalbetriebsphase die Treiberschaltung (5) in Abhängigkeit von einer Last, mit der der Motor (2) betrieben wird, überbrückbar ist, wobei die Steuereinheit (6) die Überbrückungsschaltung (4) in der Normalbetriebsphase ansteuert, so dass die Treiberschaltung (5) abhängig von einer Temperatur in der Treiberschaltung (5) überbrückt wird.

8. Motorsystem (1) nach Anspruch 7, mit einer Detektionsschaltung, um die Last, mit der der Motor (2) betrieben wird, zu detektieren, indem eine Messung eines Stromes durch den Motor (2) durchgeführt wird.

9. Motorsystem (1) nach Anspruch 7 oder 8, wobei die Steuereinheit (6), wenn mit Hilfe der Detektionsschaltung (7) festgestellt wird, dass die Last, mit der der Motor (2) betrieben wird, größer ist als ein Schwelllastwert, die Überbrückungsschaltung (4) ansteuert, dass die Treiberschaltung (5) überbrückt wird.

10. Motorsystem (1) nach Anspruch 9, wobei die Steuereinheit (6), wenn mit Hilfe der Detektionsschaltung (7) festgestellt wird, dass die Last, mit der der Motor (2) betrieben wird, kleiner ist als der Schwelllastwert, die Treiberschaltung (5) ansteuert, um den Motor (2) in einem Phasenanschnittbetrieb zu betreiben.

11. Motorsystem (1) nach Anspruch 10, wobei die Steuereinheit (6) die Treiberschaltung (5) so betreibt, dass die Leistung abhängig von der Last, mit der der Motor (2) betrieben wird, eingestellt wird.

12. Motorsystem (1) nach Anspruch 7, mit einem Temperaturdetektor (8), der mit der Steuereinheit (6) verbunden ist, um, wenn die Temperatur eine Schwelltemperatur übersteigt, die Treiberschaltung (5) mit Hilfe der Überbrückungsschaltung (5) zu überbrücken.

## Claims

1. Method for operation of a motor system (1) having a driver circuit (5) and a motor (2), wherein the driver circuit (5) is operated during a switching-on phase in order to carry out soft starting of the motor (2), and wherein the driver circuit (5) can be bridged in a normal operating phase as a function of a load at which the motor (2) is being operated, wherein during the normal operating phase, the driver circuit (5) is still bridged as a function of a temperature in the driver circuit (5).

2. Method according to Claim 1, wherein the load at which the motor (2) is being operated is detected by measurement of a current through the motor (2).

3. Method according to Claim 1 or 2, wherein the driver circuit (5) is bridged when the load at which the motor (2) is being operated is greater than a threshold load value.

4. Method according to Claim 3, wherein, when the load at which the motor (2) is being operated is less than the threshold load value, the driver circuit (5) is not bridged, and the driver circuit (5) is operated in a phase-gating mode.

5. Method according to Claim 4, wherein the power is set as a function of the load at which the motor (2) is being operated.

6. Method according to Claim 1, wherein the driver circuit is bridged when the temperature exceeds a threshold temperature.

7. Motor system (1) comprising:
- a motor (2);
- a driver circuit (5) for driving the motor;
- a control unit (6) which is connected to the driver circuit (5) in order to drive the driver circuit (5) during a switching-on phase, in order to carry out soft starting of the motor (2); and
- a bridging circuit (4), by means of which, in the normal operating phase, the driver circuit (5) can be bridged as a function of a load at which the motor (2) is being operated, wherein the control unit (6) drives the bridging circuit (4) in the normal operating phase such that the driver circuit (5) is bridged as a function of a temperature in the driver circuit (5).

8. Motor system (1) according to Claim 7, having a detection circuit in order to detect the load at which the motor (2) is being operated, by measurement of a current through the motor (2).

9. Motor system (1) according to Claim 7 or 8, wherein, when the detection circuit (7) finds that the load at which the motor (2) is being operated is greater than a threshold load value, the control unit (6) drives the bridging circuit (4) such that the driver circuit (5) is bridged.

10. Motor system (1) according to Claim 9, wherein, when the detection circuit (7) finds that the load at which the motor (2) is being operated is less than the threshold load value, the control unit (6) drives the driver circuit (5) in order to operate the motor (2) in a phase-gating mode.

11. Motor system (1) according to Claim 10, wherein the control unit (6) operates the driver circuit (5) such that the power is adjusted as a function of the load at which the motor (2) is being operated.

12. Motor system (1) according to Claim 7, having a temperature detector (8) which is connected to the control unit (6) in order to bridge the driver circuit (5) with the aid of the bridging circuit (5) when the temperature exceeds a threshold temperature.

## Revendications

1. Procédé pour faire fonctionner un système ( 1 ) de moteur, comprenant un circuit ( 5 ) d'attaque et un moteur ( 2 ), dans lequel on fait fonctionner le circuit ( 5 ) d'attaque pendant une phase de mise en marche, pour effectuer un démarrage doux du moteur ( 2 ), et dans lequel le circuit ( 5 ) d'attaque peut, dans une phase de fonctionnement normal, être shunté en fonction d'une charge avec laquelle on fait fonctionner le moteur ( 2 ), dans lequel, dans la phase de fonctionnement normal, on shunte le circuit ( 5 ) d'attaque en plus en fonction d'une température du circuit ( 5 ) d'attaque.

2. Procédé suivant la revendication 1, dans lequel on détecte la charge avec laquelle on fait fonctionner le moteur ( 2 ) en effectuant une mesure d'un courant dans le moteur ( 2 ).

3. Procédé suivant la revendication 1 ou 2, dans lequel on shunte le circuit ( 5 ) d'attaque, si la charge avec laquelle on fait fonctionner le moteur ( 2 ) est plus grande qu'un seuil de valeur de charge.

4. Procédé suivant la revendication 3, dans lequel, si la charge avec laquelle on fait fonctionner le moteur ( 2 ) est plus petite que le seuil de valeur de charge, on n'effectue pas de shunt du circuit ( 5 ) d'attaque et on fait fonctionner le circuit ( 5 ) d'attaque dans un fonctionnement par déphasage.

5. Procédé suivant la revendication 4, dans lequel on règle la puissance en fonction de la charge avec laquelle on fait fonctionner le moteur ( 2 ).

6. Procédé suivant la revendication 1, dans lequel on shunte le circuit d'attaque, si la température dépasse un seuil de température.

7. Système ( 1 ) de moteur, comprenant .
- un moteur ( 2 ) ;
- un circuit ( 5 ) d'attaque pour exciter le moteur ;
- une unité ( 6 ) de commande, qui est reliée au circuit ( 5 ) d'attaque, pour exciter le circuit ( 5 ) d'attaque pendant une phase de mise en marche afin d'effectuer un démarrage doux du moteur ( 2 ) ; et
- un circuit ( 4 ) de shunt, par lequel, dans une phase de fonctionnement normal, le circuit ( 5 ) d'attaque peut être shunté en fonction d'une charge avec laquelle on fait fonctionner le moteur ( 2 ), l'unité ( 6 ) de commande mettant le circuit ( 4 ) de charge dans la phase de fonctionnement normal, de sorte que le circuit ( 5 ) d'attaque est shunté en fonction d'une température du circuit ( 5 ) d'attaque.

8. Système ( 1 ) de moteur suivant la revendication 7, comprenant un circuit de détection pour détecter la charge avec laquelle on fait fonctionner le moteur ( 2 ) en effectuant une mesure d'un courant dans le moteur ( 2 ).

9. Système ( 1 ) de moteur suivant la revendication 7 ou 8, dans lequel l'unité ( 6 ) de commande commande, s'il est constaté à l'aide du circuit ( 7 ) de détection que la charge avec laquelle on fait fonctionner le moteur est plus grande qu'un seuil de valeur de charge, le circuit ( 4 ) de shunt, de manière à shunter le circuit ( 5 ) d'attaque.

10. système ( 1 ) de moteur suivant la revendication 9, dans lequel l'unité ( 6 ) de commande commande, s'il est constaté à l'aide du circuit ( 7 ) de détection que la charge avec laquelle on fait fonctionner le moteur ( 2 ) est plus petite que le seuil de valeur de charge, le circuit ( 5 ) d'attaque, pour faire fonctionner le moteur ( 2 ) dans un fonctionnement par déphasage.

11. Système ( 1 ) de moteur suivant la revendication 10, dans lequel l'unité ( 6 ) de commande fait fonctionner le circuit ( 6 ) d'attaque, de manière à régler la puissance en fonction de la charge avec laquelle on fait fonctionner le moteur ( 2 ).

12. système ( 1 ) de moteur suivant la revendication 7, comprenant un détecteur ( 8 ) de température, qui est relié à l'unité ( 6 ) de commande pour, si la température dépasse un seuil de température, shunter le circuit ( 5 ) d'attaque à l'aide du circuit ( 4 ) de shunt.
